# EUROPEAN PATENT SPECIFICATION

(11) **EP 0 483 441 B1**
(45) Date of publication and mention of the grant of the patent: **14.01.1998**
(21) Application number: 90830502.2
(22) Date of filing: 02.11.1990
(51) Int. Cl.: G06F 5/06

(54) **System arrangement for storing data on a FIFO basis**
System zur Speicherung von Daten auf FIFO-Basis
Arrangement pour stocker des données à base de FIFO

(43) Date of publication of application: 06.05.1992
(73) Proprietor: SGS-THOMSON MICROELECTRONICS s.r.l., 20041 Agrate Brianza (Milano) (IT)
(72) Inventor: Dell'Oro, Annalisa, I-20058 Villasanta (MI) (IT); Delgrossi, Giovanni, I-20059 Vimercate (MI) (IT)
(74) Representative: Perani, Aurelio

(56) References cited:
- EP-A- 0 196 532
- EP-A- 0 317 863
- GB-A- 1 487 706
- PATENT ABSTRACTS OF JAPAN vol. 9, no. 122 (P-359)(1845) May 28, 1985 & JP-A-60 7 529 (MITSUBISHI DENKI K.K. )
- ONDE ELECTRIQUE. vol. 44, no. 446, May 1964, PARIS FR pages 535 - 543; G. ANDRE ET AL: 'Analyseur multiparamétrique '

## Description

This invention relates to a system arrangement for storing data on a FIFO basis.

More particularly, the invention has a major field of application in an integrated circuit structure intended for use in the telecommunication sector.

It is a recognized fact that in the specific technical field to which this invention relates there exists a demand for electronic components which can store digital data on differently based methods, e.g. on the so-called FIFO (First-in, first-out) basis.

In this case, the digital data would be read out in the same order as they are written.

The prior art currently provides several types of electronic components which can operate on a FIFO basis. These can be identified by their storage capacity as well as their different internal system arrangement.

The simplest system arrangement for storing data on a FIFO basis consists of a shift register. This approach obviously suits situations which do not require a large storage capacity and where read and write operations have the same frequency.

Another approach consists in providing two buffer memories of equal capacity, one being dedicated to read operations while the other is dedicated at the same time to write operations, the two memories exchanging the read/write role according to suitable criteria, for instance when the read memory is empty.

An example of such an arrangement is described in EP-A-0317863.

Further prior approaches provide for the use of so-called RAM (Random Access Memory) storage structures, being of a static type and mainly of the two port type.

Dual port random access memories can be simultaneusly read and written at different entries, with no interference between read and write which may be requested and performed fully asynchronously the ones as to the others.

The last-named approaches, while ensuring high performance levels, are extremely wasteful of silicon area for the circuit structure. Accordingly, they need large-size integrated circuits where a large storage capacity, e.g. on the order of several hundreds kbits or megabits, is a requirement.

The technical problem that underlies this invention is to provide a system arrangement for storing digital data on a FIFO basis which has such structural and functional characteristics as to afford high performance levels as relates to storage capacity and, at the same time, a considerable reduction in the overall size of the circuit structure, thereby obviating the prior art shortcomings.

The solutive idea on which this invention stands is one of using plural random access memories of the single-gated (or: single-port) type, each having a storage capacity equivalent to a fraction of the FIFO arrangement overall capacity.

The above technical problem is solved by a system arrangement for storing data on a FIFO Basis, comprising at least three random access memories, each having a single access gate and comprising control means responsive to external read and write requests for dedicating in turn on of said memories to read operations and concurrently, for respectively dedicating in turn two others of said memories to write operations, being a write operation in one of said two other memories, accompanied by a saving write operation in the order of said two other memories.

Data storage buffering arrangements using three memories is described in GB-A-1487706. However in GB-A1487706 one of the memory is exclusively dedicated to an input process, rather than to write operations and another memory is exclusively dedicated to an output process, rather than to read operations.

The problem faced by this document is to provide a buffer when an input data stream must be asembled or someway sorted and then orderly read. Therefore the disclosed arrangement is not intended to work as a FIFO buffer.

As a consequence the input sorting process cannot release the used memory until the process is completed and the sequential output process cannot be started on such memory until this memory is released, even if a previous output process on another memory has been completed.

The reverse is also true, e.g an input process cannot be started on a memory which is still used for an output process.

To avoid access conflicts at some extent a third memory is provided, so that another input or output process can be activated on such memory even if the output or input process respectively has not been completed.

As a further consequence and limitation the state of the three memories, as dedicated to input or output processes cannot be controlled in response to read or write request, but needs predetermined control routines activated at the or prior to the beginning of a process.

The features and advantages of a system arrangement according to this invention will become apparent from the following detailed description of an embodiment thereof, given by way of illustration and not of limitation with reference to the accompanying drawings. In the drawings:
Figure 1 is a block diagram illustrating schematically the system arrangement of this invention; and
Figure 2 is a further block diagram of a detail of the system arrangement shown in Figure 1.

With reference to the drawings, generally and schematically shown at 1 is a system arrangement embodying this invention to perform digital data storage functions on a FIFO (First-in, first-out) basis.

The arrangement 1 comprises a block 2 denoted INPUT MANAGER, which has a plurality of inputs 3 and a data output 4 connected to a control device 5 denoted SELECT.

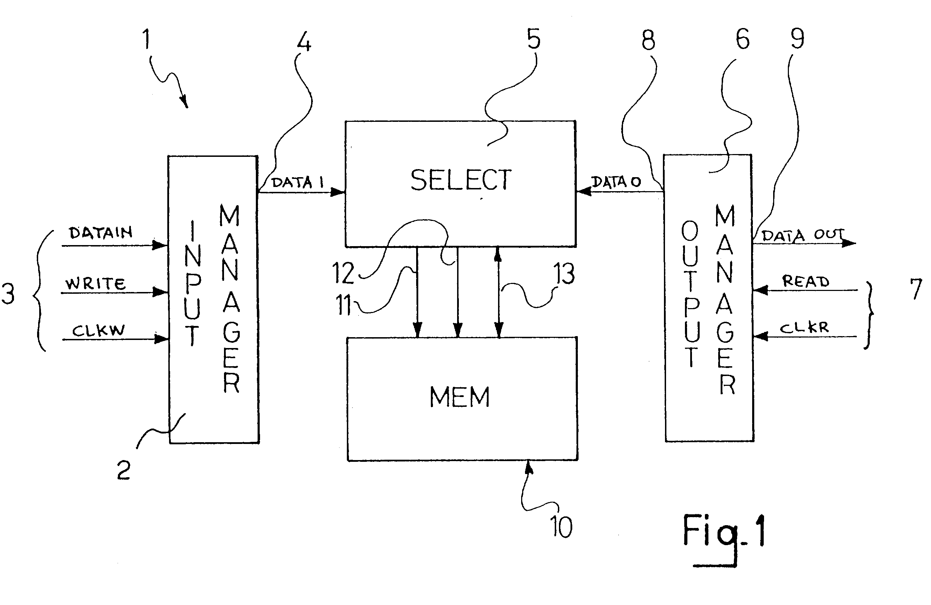

The block 2 handles write requests input by components outside the arrangement 1 at the inputs 3 and comprising (fig. 1) data DATAIN, a write control signal WRITE and a clock signal CLKW. Such requests are output at the output 4, where they are designated as DATA I, on condition that the arrangement still has residual storage capacity.

The system arrangement 1 also comprises a second block 6, denoted OUTPUT MANAGER, having a pair of inputs 7 and a pair of outputs 8, 9, with the former connected, in turn, to the control device 5.

Said block 6 receives read requests (READ and CLKR) to be input at 7 from outside components. Such requests are then passed to the output 8 on condition that the arrangement 1 has digital data stored therein to be read out.

The control device 5 handles access requests from the blocks 2 and 6. The device 5 is connected bi-directionally to a memory 10, denoted MEM, whose structure incorporates three random access memories or RAM's 14, 15 and 16. These three memories are of the single access port type and each with a storage capacity which is a fraction of or one-half the overall capacity sought for the FIFO arrangement.

Indicated at 11, 12 and 13 are the links between the control device 5 and the memory 10. The links 11 and 12 are memory select and address links, whilst the bidirectional link 13 is used for data transfer purposes.

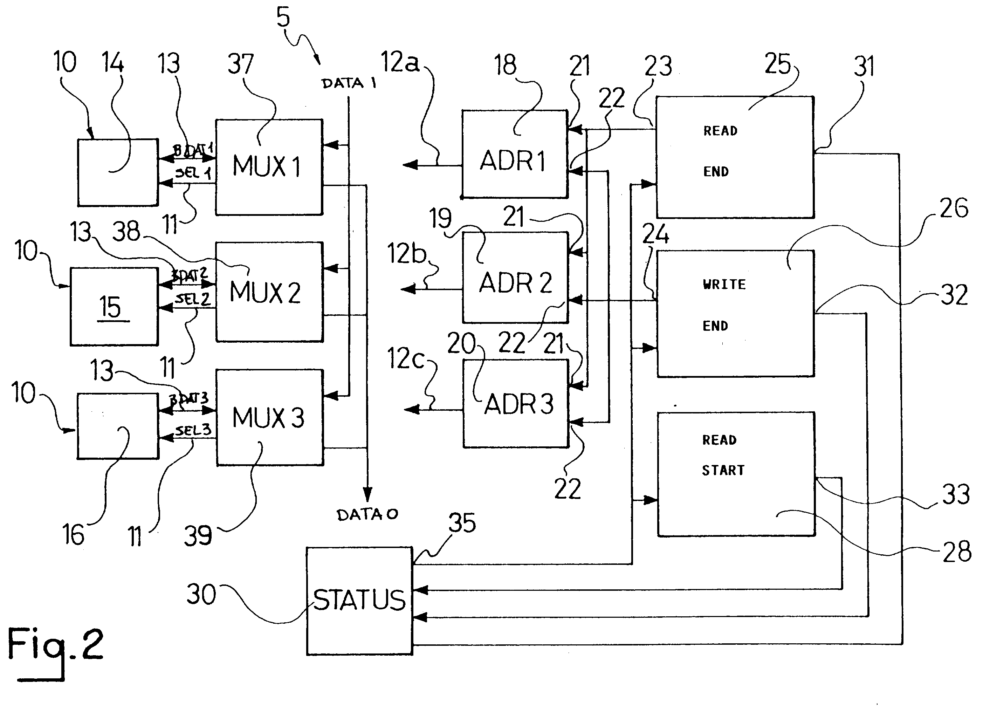

With specific reference to the example shown in Figure 2, the circuit structure of the control device 5 will be now described in detail.

Shown at 18, 19 and 20 therein are counter blocks, also designated designated ADR, which are to provide for correct addressing of the memories 14, 15 and 16. Each of these counter blocks will generate both the write and read addresses and supply, on a corresponding output 12a, 12b and 12c, the appropriate address at the required time.

Each counter 18, 19 or 20 has a pair of inputs 21, 22 connected to respective outputs 23, 24 of structurally independent logic blocks 25 and 26.

The logic block 25, designated READ END, will carry out a check on each of the random access memories 14, 15 and 16 currently dedicated to reading to determine whether it still contains data to be read. In the affirmative, that block 25 activates, through its output 23, increment of the corresponding read counter.

A second output 31 of the block 25 is connected to an input of a STATUS block 30 which contains the status variables and will carry out status changes or transitions as requested by the various components of the device 5 through an output 35.

Where the check carried out by the block 25 issues a negative response, through the output 31 a change is requested to a state whereby the system 1 will dedicate the next random access memory to read operations, on condition that the latter contains at least one data for reading out.

The second logic block 26, designated WRITE END, checks for non-saturation the actual random access memory on which write operations are being effected.

In the affirmative, the corresponding write counter is increased through the output 24; otherwise, the block 30 is requested, via a second output 32 from the block 26, a change to a state whereby the write operation is effected on the following RAM.

The device 5 structure further comprises a logic block 28, designated READ START, which is intended to check that no RAM has been already dedicated to reading. If the outcome of this search is affirmative, a request is addressed, on an output 33, for the block 30 to select a memory to be dedicated to reading.

The block 30 is arranged to have the output 35 connected in feedback relationship to the corresponding inputs of each logic block 25, 26 and 28.

The device 5 structure is then completed by select blocks 37, 38 and 39, which are provided in the same number as the random access memories 14, 15 and 16 and identified by the prefix MUX.

These select blocks will drive the input and output data to/from the memories by suitably addressing the access requests from the outputs 4 and 8 of the blocks 2 and 6 in the arrangement 1.

Each block 37, 38 or 39 has a select output, denoted by the prefix SEL, and a data output, denoted by the prefix DAT, for bi-directional access from/to each corresponding memory.

Through these select blocks, each memory 14, 15 or 16 will receive, on the link 11, logic enable signals according to whether a read or write operation is to be effected. Further commands are received over the links 12 and, in a bi-directional fashion, over the data link 13.

The operation of the arrangement 1 according to the invention will be now described with reference to a starting state whereby the system is ready to receive and store digital data on a FIFO basis.

The write operations are effected on the first random access memory 14 until filled or until a data readout is requested. Where a readout operation is actually requested, the write operations are switched to the second memory 15.

Where a readout operation interrupts a write operation, a memory location should be made available whereat the current data can be saved, because each actual write operation is accompanied by a saving write-in on the next random access memory.

The control device 5 is constantly updated, through the internal block 30, for the system state and, in particular, for the availability of memories 14, 15 or 16.

All of the possible states of the three memories 14, 15 and 16 during their loading on a FIFO basis may be laid out in a Table.

In particular, there may be identified by the character W the state wherein one memory is storing data while continuing to increase the value of its address. In that case, the memory may be interrupted at any time in its write cycle to become engaged in a readout operation with start from the first address.

On the other hand, if a memory is effecting a "saving" write operation, it cannot be interrupted because it is performing a saving operation for the word on the point of being written in the preceding memory as the latter has been interrupted to carry out a read step.

Designated by the character R is a read-dedicated memory, which cannot be interrupted because readout has priority over write-in. Of the three available memories 14, 15 and 16, only one can be dedicated to reading at any time.

A fully written memory may be designated by the character F, which can have for its single possible future state that dedicated to readout.

By contrast, designated by the character E is an empty memory the single possible evolution whereof is to a state of write start.

When the functions required of the FIFO mode are considered, the possible operating conditions show to be, for the three memories 14, 15 and 16, a sub-combination of all the possible cases.

Table 1 here below shows, by way of example, all of the overall states of the access patterns according to the invention on the three RAM's.

**TABLE 1**

| **STATE** | **14** | **15** | **16** |
|---|---|---|---|
| 1 | W | W | E |
| 2 | E | W | W |
| 3 | W | E | W |
| 4 | R | W | W |
| 5 | W | R | W |
| 6 | W | W | R |
| 7 | R | F | W |
| 8 | W | R | F |
| 9 | F | W | R |

Table 2 here below shows instead the possible transitions or changes of state to be requested by the logic blocks 26, 28 and 25. Also entered on the Table are the respective initial and final states for each of the three memories, in the same order as set forth in Table 1 above.

In Table 2, there are designated by the references FS, IL, FL the blocks 25, 26 and 28 of device 5, respectively of WRITE END, READ START and READ END.

**TABLE 2**

| **TRANSITION** | **STARTING STATE** | **ARRIVAL STATE** | **CALLER** |
|---|---|---|---|
| T1 | WWE | RWW | FS-IL |
| T2 | EWW | WRW | FS-IL |
| T3 | WEW | WWR | FS-IL |
| T4 | RWW | RFW | FS |
| T5 | WRW | WRF | FS |
| T6 | WWR | FWR | FS |
| T7 | RFW | WRW | FL |
| T8 | WRF | WWR | FL |
| T9 | FWR | RWW | FL |
| T10 | RWW | WRW | FL |
| T11 | WRW | WWR | FL |
| T12 | WWR | RWW | FL |
| T13 | WRW | WEW | FL |
| T14 | WWR | WWE | FL |
| T15 | RWW | EWW | FL |

Transitions T1, T2 and T3 may be requested even simultaneously, both by the block 26 and the block 28 because these logic blocks are asynchronous to each other and might find themselves under a condition of simultaneous request of one and the same state transition.

Further operations which may occur simultaneously are, for example, release of a full RAM to readout and the start of a reading operation with a RAM not yet enabled for such an operation.

Understandably, these two requests may be combined into a single request for transition through a non-exclusive OR gate.

The system arrangement of this invention solves, therefore, the technical problem by affording FIFO's with a large storage capacity accompanied by a considerable reduction in the overall circuit size.

The circuit structure proposed by the invention shows to be specially advantageous where applied to random access memories of the dynamic type and to the implementation of fast, asynchronous FIFO's with a large storage capacity.

The system arrangement according to the invention has been made flexible in order to provide for FIFO's of a desired size by alteration of just a few parameters, such as the size of the address counters and the memories while maintaining the remaining logics.

## Claims

1. A system arrangement for storing data on a FIFO basis, comprising at least three random access memories (14,15,16), each having a single access gate and comprising control means (5) responsive to external read and write requests for dedicating in turn one of said memories to read operations, characterised in that concurrently to said dedicating in turn of one of said memories to read operations, said control means is responsive to said external read and write requests for respectively dedicating in turn two others of said memories to write operations, being a write operation in one of said two other memories, accompanied by a saving write operation in the other of said two other memories.

## Patentansprüche

1. Eine Systemanordnung zum Speichern von Daten auf einer FIFO-Basis, die zumindest drei Direktzugriffsspeicher (14, 15, 16), von denen jeder ein Einfachzugriffstor aufweist, und eine Steuereinrichtung (5) aufweist, die auf externe Lese- und Schreib-Anforderungen anspricht, um der Reihe nach einem der Speicher Lese-Operationen zuzuweisen, dadurch gekennzeichnet, daß gleichzeitig mit dem Zuweisen von einem der Speicher der Reihe nach zu Leseoperationen die Steuereinrichtung auf die externen Lese- und Schreib-Anforderungen anspricht, um jeweils der Reihe nach zwei weiteren der Speicher Schreib-Operationen zuzuweisen, wobei eine Schreiboperation in einem der zwei weiteren Speicher von einer Sicherungsschreiboperation in dem anderen der zwei anderen Speicher begleitet wird.

## Revendications

1. Agencement de système pour stocker des données sous forme de pile FIFO, comprenant au minimum trois mémoires RAM (14,15, 16) dont chacune possède une porte d'accès unique et comprenant un moyen de commande (5) réagissant aux demandes de lecture et d'écriture externes pour dédier, tour à tour, une desdites mémoires aux opérations de lecture, caractérisé en ce que simultanément à ladite affectation, tour à tour, d'une desdites mémoires aux opérations de lecture, ledit moyen de commande réagit auxdites demandes de lecture et d'écriture externes pour dédier respectivement, à leur tour, deux autres desdites mémoires aux opérations d'écriture, à savoir une opération d'écriture dans une des deux autres mémoires, accompagnée d'une opération d'écriture avec sauvegarde dans l'autre des deux autres mémoires.
